# FASCICULE DE BREVET EUROPEEN

(11) **EP 0 628 717 B1**
(45) Date de publication et mention de la délivrance du brevet: **07.04.1999**
(21) Numéro de dépôt: 94400978.6
(22) Date de dépôt: 04.05.1994
(51) Int. Cl.: F02M 31/135

(54) **Dispositif de vaporisation de carburant dans un conduit d'admission d'un moteur à combustion interne**
Kraftstoffverdampfungsvorrichtung in einem Ansaugrohr einer Brennkraftmaschine
Fuel vaporizing device in an intake conduit of an internal combustion engine

(30) Priorité: 07.06.1993 FR 9306862
(43) Date de publication de la demande: 14.12.1994
(73) Titulaire: INSTITUT FRANCAIS DU PETROLE, 92502 Rueil-Malmaison (FR)
(72) Inventeur: Trapy, Jean, F-92000 Rueil Malmaison (FR)

(56) Documents cités:
- EP-A- 0 406 546
- EP-A- 0 477 923
- DE-A- 4 121 075
- US-A- 1 490 233

## Description

La présente invention concerne le domaine des moteurs à combustion à essence et à injection indirecte, c'est-à-dire, dont le système d'alimentation permet de pulvériser le carburant dans le ou les conduits d'admission.

On connaît différents systèmes d'injection de carburant dans les conduits d'admission.

Dans ce type d'injection, le mélange de fluide introduit dans la chambre de combustion est déjà un mélange carburé en partie préparé.

Cette technique permet de doser finement le carburant et de limiter l'inertie de son transfert dans les cylindres.

Cette technologie est par conséquent de plus en plus souvent adoptée puisqu'elle améliore le contrôle de la consommation et de la pollution ainsi que l'agrément de conduite.

Différents moyens ont déjà été envisagés pour réaliser la pulvérisation du carburant dans ce type d'injection.

Ainsi, le brevet français FR-2.575.521 déposé au nom de la demanderesse prévoit d'équiper le conduit d'admission, en amont de la soupape d'admission, d'une buse venturi.

Ce système mécanique aide à augmenter la vitesse de l'air admis et permet de mieux homogénéiser le mélange dès la sortie du conduit d'admission.

Cependant, ce système ne résoud pas le problème des démarrages à froid, pendant lesquels la température du moteur n'est en fait pas suffisante pour vaporiser le carburant.

Dans ce but, il a été proposé des moyens électriques destinés uniquement à préchauffer le carburant afin d'améliorer sa vaporisation.

Ainsi, le document FR-2.567.965 divulgue une bague chauffante disposée juste derrière l'élément d'injection de carburant, l'air s'écoulant autour de la bague tandis que le carburant est projeté à l'intérieur de la bague chauffante.

Le brevet US-4.967.706 montre un système d'admission et de pulvérisation basé sur un principe proche.

Le document PCT WO93/02.284 concerne un conduit d'admission équipé d'une pastille chauffante sur laquelle est projeté du carburant.

Le document EP-A1-0 477 923 révèle un élément plat chauffant muni d'ailettes parallèles au sens général de l'écoulement, sur lequel est projeté du carburant. Les ailettes servent ici de surface d'impact pour le carburant.

Ces différents systèmes visent essentiellement à préchauffer le carburant avant son admission dans la chambre de combustion, et plus particulièrement à le préchauffer lorsque le moteur est encore froid.

En effet, si le carburant n'est pas correctement vaporisé, il est alors nécessaire d'injecter davantage de carburant pour obtenir la combustion souhaitée ; il en résulte une consommation accrue de carburant ainsi que des émissions plus importantes à l'échappement.

Par conséquent, une vaporisation et une pulvérisation améliorées, notamment pendant les démarrages à froid, constitue un gain dans la consommation et réduit les émissions à l'échappement.

Or, ces critères deviennent très importants avec la sévérisation des normes antipollution.

La présente invention propose une solution simple aux problèmes évoqués ci-avant.

La présente invention va plus loin que les solutions de l'art antérieur puisqu'elle permet, non seulement d'améliorer la pulvérisation des jets d'injecteur dans toutes les conditions de fonctionnement, mais de plus, elle favorise la vaporisation du carburant lors des phases froides.

Selon l'invention, un effet essentiellement mécanique améliore la pulvérisation du carburant dans toutes les conditions de fonctionnement, tandis qu'un effet thermique permet la vaporisation en phases froides.

Ainsi, la présente invention propose un dispositif de vaporisation de carburant dans un conduit d'admission débouchant dans une chambre de combustion d'un moteur à combustion interne, comprenant un élément chauffant monté en aval de l'injecteur de carburant et sur lequel est projeté le carburant.

Selon l'invention, l'élément chauffant est constitué de plusieurs surfaces conductrices, toutes sensiblement parallèles au sens général de l'écoulement dans le conduit d'admission.

Avantageusement, le dispositif peut comprendre en outre un élément de commande destiné à mettre en marche l'élément chauffant lorsque la température dans le conduit d'admission est inférieure à une première valeur, et à couper l'alimentation électrique de l'élément chauffant lorsque la température dans le conduit est supérieure à une deuxième valeur.

La surface transversale occupée par l'élément chauffant est comprise entre 6 et 7 % de la surface transversale totale du conduit d'admission.

Préférentiellement, la distance entre deux surfaces voisines n'est pas inférieure à 1 mm.

La longueur de l'élément chauffant peut être d'environ la moitié du diamètre du conduit d'admission.

L'élément chauffant peut être actionné par effet joule ou bien par conduction.

Selon un mode de réalisation de l'invention, l'élément chauffant peut être constitué d'une bande enroulée en spirale dont l'axe est parallèle au sens de l'écoulement.

Selon un autre mode de réalisation de l'invention, l'élément chauffant peut être constitué d'un ensemble de plaques planes.

Les plaques planes peuvent être parallèles entre elles.

Sans sortir du cadre de l'invention, elles peuvent aussi être perpendiculaires entre elles.

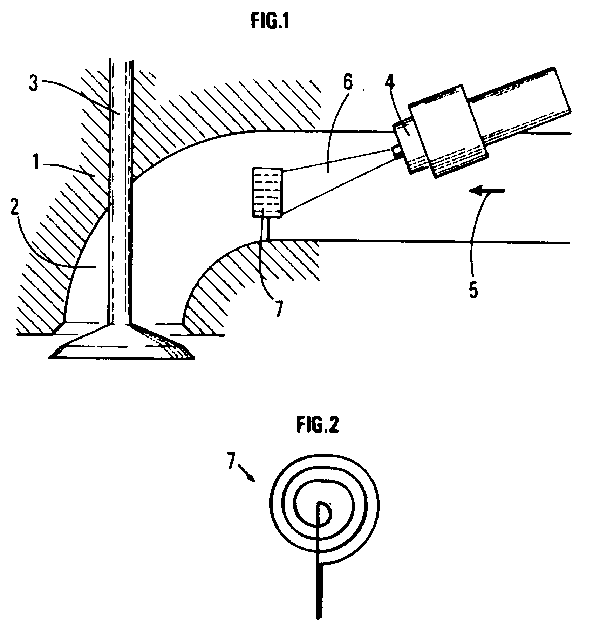

D'autres particularités, détails et avantages de l'invention apparaîtront mieux à la lecture de la description qui va suivre, faite à titre illustratif et nullement limitatif, en référence aux dessins annexés sur lesquels :
. la figure 1 est une représentation schématique partielle montrant un conduit d'admission équipé d'un dispositif selon l'invention ;
. la figure 2 est une coupe selon A-A de la figure 1, montrant plus en détail un mode de réalisation de l'invention.

Sur la figure 1, seuls ont été représentés les éléments en relation directe avec l'invention, à savoir la culasse 1, le conduit d'admission 2, la soupape 3, un injecteur de carburant 4.

La flèche 5 représente l'air admis, généralement sous une faible pression.

L'injecteur 4, de tout type connu en soi, est orienté de telle façon qu'il dirige un jet d'essence 6 vers un élément de chauffage 7 selon l'invention.

La figure 2 montre plus en détail un mode de réalisation de l'élément de chauffage 7 selon l'invention.

L'élément 7 est ici constitué d'un ruban en un matériau rigide enroulé en spirale autour d'un axe (non représenté) parallèle au sens de l'écoulement dans le conduit d'admission 2.

L'élément liquide projeté depuis l'injecteur 4 peut ainsi ruisseler sur les surfaces, parallèles entre elles, de l'élément 7.

Ce phénomène permet une atomisation du liquide par l'air le long des bords de fuite. En outre, les surfaces de ruissellement étant parallèles (ou sensiblement parallèles) au sens général de l'écoulement, ceci permet de minimiser les pertes de charge dans le conduit d'admission 2.

Afin de limiter les pertes de charge, tout en ayant un élément 7 capable d'intercepter le jet issu de l'injecteur 4, le diamètre de l'élément 7 peut être compris entre 20 et 30 % du diamètre intérieur du conduit 2. En terme de surface transversale, celle de l'élément 7 est donc comprise entre 6 et 7 % de la surface transversale totale du conduit 2.

Le pas d'enroulement ne sera pas trop réduit pour favoriser la perméabilité au flux d'air, mais cependant suffisamment resserré pour profiter de l'effet "brise jet" de l'élément 7 ; un pas quelque peu supérieur à 1 mm peut être choisi.

La largeur du ruban sera choisie de façon à ce que le film liquide sur la surface mouillée constitue une sorte de réserve de liquide soumise à l'action de l'air. Une largeur de l'ordre de 50 % du diamètre extérieur de l'enroulement peut être choisie.

L'élément 7 ne sera préférentiellement pas placé trop près de la sortie de l'injecteur 4 afin de profiter au maximum de la pulvérisation naturelle inhérente à l'élément d'injection 4.

Une fonction supplémentaire du dispositif selon l'invention consiste en un chauffage du ruban par effet Joule ou par conduction. Cette fonction aura pour objet d'aider à la vaporisation du carburant lors des phases où le moteur est froid ; elle pourra être commutable dès que la température normale de fonctionnement est atteinte. Dans le cas où le chauffage se fait par conduction, la liaison de l'enroulement avec la (ou les) paroi(s) devra être en contact avec une source de chaleur externe, qui pourra être une paroi proche de la chambre de combustion (avec par exemple une liaison par caloduc) ou une résistance électrique.

Si le ruban est métallique, le chauffage pourra être réalisé directement en reliant ses extrémités à une source de courant électrique, et en profitant de l'effet Joule induit par sa résistance électrique naturelle.

La consommation énergétique d'un tel système reste réduite compte-tenu de la volatilité des essences, des faibles masses de carburant concernées, et d'une courte durée de fonctionnement. Pour un moteur d'automobile de taille moyenne, on peut escompter une puissance de chauffage qui pourrait être au maximum de 0,5 kW, ce qui pendant les cinq premières minutes d'un démarrage représenterait une surconsommation de l'ordre de 1 %, qui est très modeste comparée à celle que peut entraîner une mauvaise alimentation. Naturellement, si la source de chaleur provenait du moteur lui-même, la surconsommation pourrait être notablement réduite.

Il est évident que d'autres dispositions et agencements du ruban pourraient être adoptés (grille parallèle, croisée, etc...). De même, pour minimiser la perte de charge, le ruban pourrait être profilé dans le sens de l'écoulement, mais cette complication de réalisation ne semble pas indispensable au bon fonctionnement du système.

Ainsi, selon un autre mode de réalisation de l'invention, l'élément chauffant 7 peut être constitué d'un ensemble de plaques toutes parallèles entre elles et respectant les caractéristiques géométriques énoncées ci-avant.

Un ensemble de plaques perpendiculaires entre elles peut constituer l'élément chauffant 7.

Bien entendu, l'homme du métier pourra envisager d'autres modifications, améliorations au dispositif.

## Revendications

1. Dispositif de vaporisation de carburant dans un conduit d'admission (2) débouchant dans une chambre de combustion d'un moteur à combustion interne comprenant un élément chauffant (7) ayant une forme telle qu'un diamètre puisse être défini, et étant monté en aval de l'injecteur de carburant (4) le carburant étant projeté sur l'élément chauffant (7), caractérisé en ce que l'élément chauffant (7) est constitué de plusieurs surfaces conductrices, toutes sensiblement parallèles au sens général de l'écoulement du fluide dans le conduit d'admission (2), en ce que l'élément chauffant (7) occupe entre 6 et 7% de la surface transversale totale du conduit d'admission (2) afin d'y limiter les pertes de charge et en ce que la longueur de l'élément chauffant mesurée dans le sens de l'écoulement est d'environ la moitié du diamètre de l'élément chauffant (7) mesurée dans un plan perpendiculaire à la direction de l'écoulement.

2. Dispositif de vaporisation de carburant selon la revendication 1, caractérisé en ce qu'il comprend en outre un élément de commande destiné à mettre en marche l'élément chauffant lorsque la température dans le conduit d'admission (2) est inférieure à une première valeur, et à couper l'alimentation électrique de l'élément chauffant lorsque la température dans ledit conduit (2) est supérieure à une deuxième valeur supérieure à la première.

3. Dispositif selon l'une quelconque des revendications précédentes, caractérisé en ce que la distance entre deux surfaces parallèles voisines n'est pas inférieure à 1 mm.

4. Dispositif selon l'une quelconque des revendications précédentes, caractérisé en ce que l'élément chauffant (7) est actionné par effet joule.

5. Dispositif selon l'une quelconque des revendications précédentes, caractérisé en ce que l'élément chauffant (7) est actionné par conduction.

6. Dispositif de vaporisation selon la revendication 1, caractérisé en ce que l'élément chauffant (7) est constitué d'une bande enroulée en spirale dont l'axe est parallèle au sens de l'écoulement du fluide dans le conduit d'admission (2).

7. Dispositif de vaporisation selon l'une des revendications 1 à 7, caractérisé en ce que l'élément chauffant (7) est constitué d'un ensemble de plaques planes.

8. Dispositif de vaporisation selon la revendication 7, caractérisé en ce que lesdites plaques sont parallèles entre elles.

9. Dispositif de vaporisation selon la revendication 7, caractérisé en ce que lesdites plaques sont perpendiculaires entre elles.

## Patentansprüche

1. Vorrichtung zur Verdampfung von Kraftstoff in einer Ansaugleitung (2), die in eine Brennkammer einer Brennkraftmaschine mündet, ein Heizelement (7) mit einer Form derart, daß ein Durchmesser definiert werden kann, umfassend und hinter der Kraftstoffeinspritzeinrichtung (4) angebracht, wobei der Kraftstoff auf das Heizelement (7) versprüht wird, dadurch gekennzeichnet, daß das Heizelement (7) gebildet wird aus mehreren leitenden Flächen, die im wesentlichen sämtlich parallel zur allgemeinen Strömungsrichtung des Fluids in der Ansaugleitung (2) ist, daß das Heizelement (7) zwischen 6 und 7% der gesamten Transversalfläche der Ansaugleitung (2) einnimmt, um hierin die Druckverluste zu begrenzen und daß die Länge des Heizelementes, gemessen in Strömungsrichtung, etwa gleich der Hälfte des Durchmessers des Heizelementes (7), gemessen in einer Ebene senkrecht zur Strömungsrichtung, ist.

2. Vorrichtung zur Verdampfung von Kraftstoff nach Anspruch 1, dadurch gekennzeichnet, daß sie im übrigen ein Steuerelement umfaßt, das dazu bestimmt ist, das Heizelement in Gang zu setzen, wenn die Temperatur in der Ansaugleitung (2) kleiner als ein erster Wert wird und die elektrische Speisung des Heizelementes zu unterbrechen, wenn die Temperatur in dieser Leitung (2) größer als ein zweiter Wert, der größer als der Erste ist, wird.

3. Vorrichtung nach einem der vorhergehenden Ansprüche, dadurch gekennzeichnet, daß die Entfernung zwischen zwei benachbarten parallelen Flächen nicht kleiner als 1 mm ist.

4. Vorrichtung nach einem der vorhergehenden Ansprüche, dadurch gekennzeichnet, daß das Heizelement (7) durch Joule-effekt betätigt wird.

5. Vorrichtung nach einem der vorhergehenden Ansprüche, dadurch gekennzeichnet, daß das Heizelement (7) durch Leitung betätigt wird.

6. Vorrichtung zur Verdampfung nach Anspruch 1, dadurch gekennzeichnet, daß das Heizelement (7) gebildet wird aus einem spiralförmig gewickelten Band, dessen Achse parallel zur Strömungsrichtung des Fluids in der Ansaugleitung (2) ist.

7. Vorrichtung zur Verdampfung nach einem der Ansprüche 1 bis 7, dadurch gekennzeichnet, daß das Heizelement (7) aus einer Anordnung planer Platten gebildet ist.

8. Vorrichtung zur Verdampfung nach Anspruch 7, dadurch gekennzeichnet, daß diese Platten untereinander parallel sind.

9. Vorrichtung zur Verdampfung nach Anspruch 7, dadurch gekennzeichnet, daß diese Platten zueinander senkrecht stehen.

## Claims

1. A device for vaporising fuel in an intake pipe (2) opening into a combustion chamber of an internal combustion engine consisting of a heating element (7) of a shape such that a diameter can be defined and being mounted downstream of the fuel injector (4), the fuel being projected onto the heating element (7), characterised in that the heating element (7) is made up of several conductive surfaces, all substantially parallel with the general direction of the fluid flow through the intake pipe (2), in that the heating element (7) occupies between 6 and 7% of the total transverse surface of the intake pipe (2) where it limits pressure losses and in that the length of the heating element measured in the direction of flow is approximately half the diameter of the heating element (7) measured in a plane perpendicular to the direction of flow.

2. A device for vaporising fuel as claimed in claim 1, characterised in that it also has a control element designed to activate the heating element if the temperature in the intake pipe (2) is lower than a first value and cut off the power supply to the heating element if the temperature in said pipe (2) is greater than a second value higher than the first.

3. A device as claimed in one of the preceding claims, characterised in that the distance between two adjacent parallel surfaces is not less than 1 mm.

4. A device as claimed in any one of the preceding claims, characterised in that the heating element (7) is operated by joule effect.

5. A device as claimed in any one of the preceding claims, characterised in that the heating element (7) is operated by conduction.

6. A vaporising device as claimed in claim 1, characterised in that the heating element (7) is made up of a strip wound in a spiral, the axis of which is parallel with the direction of fluid flow through the intake pipe (2).

7. A vaporising device as claimed in one of claims 1 to 7, characterised in that the heating element (7) is made up of a set of flat plates.

8. A vaporising device as claimed in claim 7, characterised in that said plates are parallel with one another.

9. A vaporising device as claimed in claim 7, characterised in that said plates are perpendicular to one another.
